# EUROPÄISCHE PATENTSCHRIFT

(11) **EP 3 248 449 B1**
(45) Veröffentlichungstag und Bekanntmachung des Hinweises auf die Patenterteilung: **31.05.2023**
(21) Anmeldenummer: 17160271.7
(22) Anmeldetag: 10.03.2017
(51) Int. Cl.: A01B 23/02, A01B 19/02, A01B 61/04, A01B 35/12

(54) **LANDWIRTSCHAFTLICHES BODENBEARBEITUNGSGERÄT, FEDERZINKEN HIERFÜR UND ANORDNUNG EINES FEDERZINKENS AN EINEM LANDWIRTSCHAFTLICHEN BODENBEARBEITUNGSGERÄT**
AGRICULTURAL SOIL WORKING IMPLEMENT, SPRING TINE FOR SAME AND ASSEMBLY OF A SPRING TINE ON AN AGRICULTURAL SOIL WORKING IMPLEMENT
CULTIVATEUR, DENTS PLATES ASSOCIÉES ET SYSTÈME DE DENTS PLATES SUR UN CULTIVATEUR

(30) Priorität: 28.04.2016 DE 102016107951
(43) Veröffentlichungstag der Anmeldung: 29.11.2017
(73) Patentinhaber: Horsch Maschinen GmbH, 92421 Schwandorf (DE)
(72) Erfinder: PIRKENSEER, Michael, 92421 Schwandorf (DE); DUSCHINGER, Andreas, 92421 Schwandorf (DE)
(74) Vertreter: Benninger, Johannes

(56) Entgegenhaltungen:
- EP-A1- 1 396 183
- WO-A1-2010/147545
- FR-A1- 2 418 612
- US-A- 1 768 289
- US-A- 3 710 872

## Beschreibung

Die vorliegende Erfindung betrifft ein landwirtschaftliches Bodenbearbeitungsgerät mit den Merkmalen des unabhängigen Anspruchs 1 und Federzinken, insbesondere zur Verwendung in der landwirtschaftlichen Bodenbearbeitung, mit den Merkmalen des unabhängigen Anspruchs 8.

Bei der landwirtschaftlichen Bodenbearbeitung kann es bei bestimmten Bodenverhältnissen sinnvoll sein, den Ackerboden mittels geeigneter Grubberwerkzeuge zu lockern, zu krümeln und/oder zu belüften. Auch bei Böden, die nicht oder nur selten gepflügt werden, kann es sinnvoll sein, nach einer Ernte übrig gebliebene Stoppeln einzuarbeiten, Unkräuter zurückzudrängen etc. Diese sog. nichtwendende Bodenbearbeitung wurde in der Vergangenheit oftmals mit fest an einem Trägerrahmen verankerten starren Grubberzinken durchgeführt, die allerdings je nach gewünschter Arbeitstiefe extremen Belastungen ausgesetzt sein konnten.

Um diese Belastungen zu reduzieren, wurden in den vergangenen Jahrzehnten federnde Grubberzinken eingesetzt, die sich gegenüber Hindernissen im Boden als nachgiebig erwiesen und durch ihre Vibrationsfähigkeit besser geeignet waren, größere Erdschollen zu zerkleinern. Allerdings sind mit der federnden Aufhängung der Grubberzinken auch gewisse Nachteile verknüpft, so etwa der sich mit dem variablen Anstellwinkel ändernde Tiefgang des jeweiligen Zinkens, der nicht nur nach rückwärts, sondern auch nach oben ausweicht. Bereits geringe Widerstandsänderungen im Boden können zu einer ausgeprägten Ausweichbewegung führen, woraus eine ungleichmäßige Arbeitstiefe resultiert.

Sog. halbstarre Aufhängungen von Grubberzinken versuchten, die Nachteile des starken Ausweichens nach oben mit der damit verbundenen ausgeprägten Reduzierung des Tiefgangs des Zinkens zu vermeiden. Bei diesen sog. halbstarren Zinken können bspw. nur die oberen Abschnitte flexibel ausgeführt sein, während die unteren, in den Boden eintauchenden Abschnitte relativ biegesteif bleiben, wobei der flexible Abschnitt bspw. durch eine Schraubenfeder mit definierbarer Federkraft abgestützt sein kann. Vorteilhaft an diesen halbstarren Ausführungen ist die relativ geringe Ausweichbewegung nach oben, wenn der Zinken auf einen Bodenwiderstand trifft, wobei dennoch die zerkleinernden Effekte durch die Vibrationswirkungen erhalten bleiben.

Da jedoch die Flexibilität und die mit den halbstarren Zinken realisierbaren Ausweichbewegungen für viele Zwecke nicht ausreichen, sind für zahlreiche Bodenbedingungen nach wie vor Federzinken das Mittel der Wahl. Allerdings hat sich bei diesen Federzinken in der Praxis gezeigt, dass oftmals Zielkonflikte zwischen einer gewünschten Nachgiebigkeit beim Auftreffen auf Hindernisse und einer maximal gewünschten bzw. zulässigen Verformung auftreten können, so dass mittels verschiedener Maßnahmen nicht nur versucht wurde, die Ausweichbewegungen solcher Federzinken zu begrenzen. Ein weiteres Problem kann dann auftreten, wenn relativ elastische Federzinken beim Auftreffen auf ein Hindernis im Boden ausweichen und sich nach dem Passieren des Hindernisses schwungvoll zurückbewegen. Solche Rückschwingbewegungen können unter Umständen Beschädigungen, teilweise sogar ein mechanisches Versagen des Federzinkens verursachen.

Die DE 102 07 020 A1 offenbart einen Grubber mit Federzinken, die jeweils eine Federwindung oder mehrere Federwindungen aufweisen. Den Federzinken sind dämpfende Vorrichtungen zugeordnet, die das Zurückschwingen in Fahrtrichtung abbremsen sollen, was die erwähnte Beschädigungsgefahr beim Zurückschwingen des jeweiligen Federzinkens nach dem bestimmungsgemäßen Ausweichen reduzieren soll. Die dämpfenden Vorrichtungen können bspw. durch elastische Kunststoffelemente gebildet sein, die als Anschlagpuffer für einen aufhängungsnahen oberen Bereich der Federzinken dienen, so dass sie beim Zurückschwingen dort auftreffen und anliegen können. Der Federzinken ist mit einem Einspannabschnitt an der Unterseite des Tragrahmens befestigt. Nach dem Einspannabschnitt schließt sich zumindest eine Federwindung an, welche hinter dem Tragrahmen angeordnet ist, gefolgt von einem sichelförmigen Abschnitt. Da unterhalb der Federwindung die dämpfende Vorrichtung angeordnet ist, ist der Raum zwischen dem Tragrahmen und der Spitze des Federzinkens deutlich eingeschränkt.

Ein in beide Bewegungsrichtungen wirkendes Zugelement zur Energieumwandlung eines schwingenden Federzinkens wird in der DE 102 38 917 A1 vorgeschlagen. Dort ist zwischen einem Maschinenrahmen eines Grubbers, an dem mehrere Federzinken befestigt sind, und einer Rückseite der jeweiligen Federzinken ein Zugelement angeordnet, das bspw. durch einen Stoßdämpfer oder ein Federelement gebildet sein kann.

Ein ähnliches System, bei dem die Rückseiten der Federzinken eines Grubbers mit hydraulischen Dämpfungselementen abgestützt sind, zeigt die DE 103 41 757 A1. Durch eine gemeinsame hydraulische Verbindung der Dämpfungselemente lassen sich diese in ihren Dämpfungseigenschaften bedarfsweise verstellen und an jeweils unterschiedliche Bodenbeschaffenheiten anpassen.

Da trotz der bei bekannten Grubbersystemen eingesetzten Dämpfungselemente bei bestimmten Betriebsbedingungen mechanische Überlastungen auftreten können, wird in der DE 202 13 736 U1 eine mechanische Überlast- oder Steinsicherung für Scharstiele bzw. Grubberzinken vorgeschlagen. Hierzu befindet sich ein Federpaket zwischen einem Maschinenrahmen und dem jeweiligen Federzinken, das bei hohem Widerstand zur Erzielung einer definierten Auslösung auf Druck belastet und seitlich ausgelenkt werden soll.

Eine weitere Variante eines Federzinkens wird in der WO 2010/147545 A1 beschrieben. Die Federzinken weisen in ihrem oberen Bereich zwischen einer Fixierung an einem Maschinenrahmen und ihrem sichelförmigen, in den Boden eingreifenden Zinkenverlauf eine einfache Windung auf, die den Zinken definierte Federeigenschaften verleihen und ihnen ein Ausweichen beim Auftreffen auf harte Bodenwiderstände ermöglichen soll. Die Anordnung der eine Ringfeder bildenden Windung im Verlauf der Federzinken unterhalb des Maschinenrahmens führt zu einer relativ großen Bauhöhe der gesamten Maschine.

Durch EP 1 396 183 A1 und DE 10 2009 051 A1 wird jeweils eine weitere Anordnung von Federzinken offenbart. Bei beiden Dokumenten ist der Federzinken so angeordnet, dass dieser jeweils auf der Rahmenunterseite mittels der einer Einrichtung festgesetzt ist; aufgrund seiner S-förmigen Ausführung wird der Federzinken zunächst über den Rahmen und anschließend unter dem Rahmen geführt. Dies führt zwangsläufig zu einem reduziertem Raum zwischen Rahmen und Scharspitze des Federzinkens, was beispielsweise eine erhöhte Verstopfungsanfälligkeit während der Feldbearbeitung zur Folge haben kann. Die Vorspannung des Federzinkens mittels der Vorspanneinrichtung führt zudem zu einer relativ großen Bauhöhe der gesamten Maschine.

Für den praktischen Einsatz haben sich manche der vorgeschlagenen Lösungen als aufwendig und technisch komplex erwiesen, auch wenn sie eine Anpassbarkeit an verschiedene Bodenverhältnisse erlauben.

Angesichts der aus dem Stand der Technik bekannten Grubbersysteme mit Federzinken kann das vorrangige Ziel der vorliegenden Erfindung darin gesehen werden, einen für unterschiedliche Bodenverhältnisse, für steinige Böden wie für feuchte oder schwere Böden universell verwendbaren Grubber mit Federzinken bzw. einen solchen Federzinken für einen landwirtschaftlichen Einsatz zur Verfügung zu stellen, der auf diesen unterschiedlichen Bodenverhältnissen gleichermaßen seine Aufgaben erfüllen kann. Der Federzinken soll einerseits beim Auftreffen auf Hindernisse wie Steine etc. über einen ausreichenden Federweg verfügen, andererseits aber bei widerständigen Bodenverhältnissen nicht zu nachgiebig sein und nicht zu weit ausweichen, so dass insgesamt für unterschiedliche Bodenverhältnisse eine weitgehend gleichmäßige Bodenbearbeitung erreicht werden kann. Ein weiteres Ziel besteht darin, den Federzinken bzw. den mit solchen Federzinken ausgestatteten Grubber möglichst kompakt auszuführen.

Diese Ziele werden mit den Gegenständen der unabhängigen Ansprüche erreicht. Merkmale vorteilhafter Weiterbildungen der Erfindung lassen sich den abhängigen Ansprüchen entnehmen. So schlägt die vorliegende Erfindung zur Erreichung zumindest einiger der genannten Ziele ein landwirtschaftliches Bodenbearbeitungsgerät mit den Merkmalen des unabhängigen Anspruchs 1 vor, das insbesondere durch einen Grubber gebildet sein kann, der mit einer Mehrzahl oder Vielzahl von in den Boden eingreifenden Zinken ausgestattet ist. Das erfindungsgemäße landwirtschaftliche Bodenbearbeitungsgerät umfasst einen Rahmen oder Tragrahmen sowie mindestens einen daran befestigten Federzinken, normalerweise jedoch einige oder mehrere daran befestigte Federzinken, welche jeweils wenigstens eine Federwindung aufweisen, was ihnen eine erwünschte und zur Vermeidung von Beschädigungen erforderliche Nachgiebigkeit beim Auftreffen auf größere Hindernisse wie Steine, Erdbrocken oder andere derartige Hindernisse verleiht. Der Federzinken ist in zumindest fünf aneinander anschließende Abschnitte unterteilt, wobei ein erster Abschnitt durch einen Einspannabschnitt gebildet ist, welcher auf einer Oberseite oder auf einer Unterseite des Rahmens aufliegt und dort befestigbar ist. Ein zweiter Abschnitt ist durch wenigstens eine Windung gebildet, welche wenigstens eine Windung des Federzinkens in Bewegungsrichtung des Bodenbearbeitungsgeräts frontseitig des Rahmenträgers angeordnet ist, an dem der Federzinken befestigbar ist. Ein dritter Abschnitt ist durch einen Auflageabschnitt gebildet, welcher in etwa horizontal über die Oberseite oder unter der Unterseite des Querträgers geführt ist. Ein vierter Abschnitt ist durch einen bogen- oder sichelförmigen Verlauf des Federzinkens gebildet ist. Ein fünfter Abschnitt ist durch ein in Fahrtrichtung schräg nach unten und vorne weisendes freies Ende gebildet, das als Befestigungsabschnitt für ein den Boden furchendes Eingriffselement dient.

Wenn im vorliegenden Zusammenhang von einer Befestigung der Federzinken am Rahmen oder Tragrahmen des landwirtschaftlichen Bodenbearbeitungsgerätes die Rede ist, so kann dies normalerweise eine lösbare Verbindung umfassen, insbesondere durch unmittelbare oder mittelbare Verschraubungen, wobei eine mittelbare Verschraubung bspw. mit zusätzlichen Klemmelementen ausgebildet sein kann. Eine unmittelbare Verschraubung kann bspw. bedeuten, dass an den Einspannabschnitten der Federzinken entsprechende Schraublöcher für Durchsteckverschraubungen oder angeformte oder angeschweißte Schraubbolzen vorgesehen sein können. Eine mittelbare Verschraubung kann bspw. durch Klemmelemente gebildet sein, die ober- und/oder unterhalb des jeweiligen Rahmenrohrs oder Trägers angeordnet sind, dieses/diesen umgreifen und dabei gleichzeitig den Einspannabschnitt des jeweiligen Federzinkens klemmend halten, ohne dass dieser mit zusätzlichen Befestigungselementen ausgestattet sein muss.

Gemäß der Erfindung ist vorgesehen, dass zumindest einer der Federzinken mit definierter und/oder innerhalb definierbarer Grenzen variabel einstellbarer und/oder innerhalb definierbarer Grenzen variabler Vorspannkraft beaufschlagt ist.

Während beim bekannten Stand der Technik meist der Rahmen das Ausfedern des Federzinkens nach oben behindert hat, wurde die Anordnung des Federzinkens am Rahmen dahingehend optimiert, dass der Federzinken, insbesondere der Auflageabschnitt über die Oberseite oder über die Unterseite des Querträgers geführt ist. Damit besitzt der erfindungsgemäße Gegenstand ein gutes Ausfederverhalten beim Auftreffen auf ein Hindernis und weist eine geringere Verstopfungsanfälligkeit auf, welche durch den Boden bei der Feldfahrt verursacht werden kann. Zudem hat das erfindungsgemäße landwirtschaftliche Bodenbearbeitungsgerät den besonderen Vorteil, dass durch den Verlauf des jeweiligen zweiten Abschnittes der Federzinken, der durch die Windung gebildet ist und sich vorderhalb des Rahmenträgers befindet, an dem der Federzinken befestigt ist, und durch den Verlauf des Auflageabschnittes, der sich oberhalb oder unterhalb des Rahmenträgers befindet, eine vergleichsweise flache Gesamtgestaltung des Bodenbearbeitungsgerätes realisieren lässt. Die tragende Rahmenstruktur des Bodenbearbeitungsgerätes kann somit in vergleichsweise geringer Höhe über dem Boden angeordnet werden, ohne dass den Federzinken dadurch der ausreichende Bewegungsraum zum Ausweichen bei höheren Bodenwiderständen während der Bodenbearbeitung fehlt.

Es kann insbesondere vorgesehen sein, dass der wenigstens eine mit Vorspannkraft beaufschlagte oder beaufschlagbare Federzinken in einem ersten, nicht montierten Zustand entspannt bzw. nicht vorgespannt ist, während dieser Federzinken in einem zweiten, montierten Zustand vorgespannt und/oder mit definierter und/oder innerhalb definierbarer Grenzen variabler und/oder variabel einstellbarer Vorspannkraft beaufschlagt ist.

Dem erfindungsgemäßen landwirtschaftlichen Bodenbearbeitungsgerät bzw. dem erfindungsgemäßen Federzinken sollen bestimmte mechanische Eigenschaften aufgeprägt werden, welche die Erreichung der oben genannten Ziele ermöglichen sollen. Zu diesem Zweck wird ein Gerät mit Federzinken bzw. mindestens ein solcher Federzinken geschaffen bzw. zur Verfügung gestellt, der zum einen eine definierte Vorspannkraft besitzt, um somit eine möglichst gleichmäßige Bodenbearbeitung zu gewähren, der aber gleichzeitig so ausgebildet ist, dass er beim Auftreffen auf Hindernisse wie etwa Steine noch einen ausreichenden Federweg zur Verfügung stellen kann. Dennoch soll das Gerät mit den Federzinken bzw. der mindestens eine für ein solches Gerät vorzugsweise einsetzbare Federzinken möglichst kompakt bauen und möglichst wenig Bauraum benötigen. Dieses Ziel kann insbesondere dadurch erreicht werden, indem der Federzinken einen ersten, nicht montierten und nicht vorgespanntem Zustand, und einem zweiten, vorgespannten und eine definierte Vorspannkraft ausübenden Zustand einnehmen bzw. aufweisen kann.

Das erfindungsgemäße Gerät kann insbesondere ein von einer landwirtschaftlichen Zugmaschine gezogenes oder selbstfahrendes landwirtschaftliches Bodenbearbeitungsgerät sein, worunter insbesondere ein Grubber verstanden werden kann, das bzw. der mit einem Tragrahmen sowie ggf. mit geeigneten Mitteln zur Tiefenführung wie z.B. mit höhenverstellbaren Tragrädern ausgestattet sein kann. Vorzugsweise trägt der Rahmen dieses Bodenbearbeitungsgerätes bzw. dieser Grubbers mehrere, zumindest jedoch einen zumindest abschnittsweise bogen-, sichelförmig oder S-förmig gestalteten, zumindest abschnittsweise elastisch verformbaren und/oder unter Zugbelastung bei einem Eingriff bzw. Eintauchen in einen Ackerboden zumindest abschnittsweise elastisch nachgiebigen Federzinken zur furchenden Bodenbearbeitung, wobei die elastischen Eigenschaften des wenigstens einen Federzinkens sowohl durch die Formgebung und die Materialstärke des Federzinkens, durch seine Materialeigenschaften als auch durch seine Verankerung am Tragrahmen definiert sind, und wobei der Federzinken mit definierter oder innerhalb definierbarer Grenzen variabel einstellbarer Vorspannkraft am Tragrahmen verankert bzw. fixiert ist.

Eine derartige Aufprägung einer Vorspannkraft kann insbesondere dann von Vorteil sein, wenn der erfindungsgemäße Federzinken in einem Sägerät Verwendung finden und bei dessen Einsatz eine konstante Arbeitstiefe eingehalten werden soll.

Die zur Erreichung, zumindest eines oder auch mehrerer der oben genannten Ziele, dem wenigstens einen Federzinken aufgeprägte Vorspannung resultiert in einem definierbaren Verhalten des Federzinkens in einem regulären Bodenbearbeitungsmodus, wo er auf geringen mechanischen Widerstand stößt, wenn das Bodenbearbeitungsgerät bzw. der Grubber durch zu furchenden Ackerboden gezogen wird. Jedoch auch bei größeren auftretenden Widerständen zeigt der solchermaßen vorgespannte Federzinken ein ganz spezifisches, erwünschtes Verhalten. So weist der zumindest eine im montierten Zustand mit der Vorspannkraft beaufschlagte Federzinken eine nichtlineare Kraft-Weg-Kennlinie auf. Diese nichtlineare Kraft-Weg-Kennlinie zeigt einen zunächst von einem Nullpunkt ausgehenden relativ flachen Verlauf; dieser Verlauf geht bei Erreichen der definierten bzw. definierbaren Vorspannkraft in einen steileren Verlauf über. Somit weist die Kraft-Weg-Kennlinie des solchermaßen ausgestatteten Federzinkens einen mehr oder weniger deutlichen Knick in ihrem Verlauf auf, der je nach Ausgestaltung der Vorspannung ggf. auch durch einen abgerundeten bzw. weicheren Übergang oder - je nach Ausgestaltung als mehrstufige Vorspannung - auch durch mehrfache Knicke etc. ersetzt sein kann.

Die Positionierung der Knick- oder Unstetigkeitstelle in der Kraft-Weg-Kennlinie des erfindungsgemäßen Federzinkens kann bedarfsweise variabel sein und bspw. bei einem sinnvollen Wert von etwa einem Kilonewton (1 kN), wahlweise jedoch auch darunter oder darüber liegen. Die Steigung der Kraft-Weg-Kennlinie selbst hängt dagegen stärker von der Gestaltung und den elastischen Eigenschaften des Federzinkens ab.

Erfindungsgemäß ist der zumindest eine im montierten Zustand mit der Vorspannkraft beaufschlagte Federzinken mittels eines Auflageelements vorgespannt.

Bei diesem Auflageelement kann es sich bspw. um ein elastisches Bauteil handeln, das den Federzinken vorzugsweise nahe seiner Befestigungsstelle am Rahmen vorspannt. Besonders eignet sich für diese Zwecke ein elastisches Auflageelement, das bspw. durch einen Kunststoff mit gewünschten elastischen Eigenschaften gebildet sein kann, so dass die elastischen Eigenschaften des elastisch nachgiebigen Materials des Auflageelements die Vorspannkraft für den Federzinken innerhalb gewünschter definierbarer Grenzen variabel bzw. vorgebbar macht. Ebenso denkbar wäre jedoch auch ein nicht elastisches, starres Auflageelement, welches bspw. als Metallelement ausgebildet sein kann.

Ebenso denkbar ist es, das Bodenbearbeitungsgerät gemäß einer anderen nicht-erfindungsgemäßen Ausführungsvariante mit einem Aktor auszustatten, bspw. mit einem hydraulischen Aktor und/oder mit einem pneumatischen Aktor und/oder mit einem Feder- und/oder Dämpfungselement, das für die gewünschte Vorspannung des Federzinkens sorgt, ggf. sogar für eine variabel einstellbare Vorspannung, die je nach Bedarf auch im laufenden Betrieb des Bodenbearbeitungsgerätes an die jeweiligen Erfordernisse und die Bodeneigenschaften und/oder die Fahrgeschwindigkeit etc. angepasst werden kann.

Weiterhin kann bei dem erfindungsgemäßen Bodenbearbeitungsgerät vorgesehen sein, dass der wenigstens eine mit der Vorspannkraft beaufschlagte Federzinken einen bogen- oder sichelförmigen Verlauf aufweist, welcher abschnittsweise, insbesondere in einem Bereich nahe des Rahmens in etwa gleichgerichtet, parallel oder ungefähr parallel zu einem am oder im Rahmen befestigten bzw. befestigbaren Einspannabschnitt verläuft, wobei die wenigstens eine vollständige Federwindung des Federzinkens einen Kreisbogen oder Kreisbogenabschnitt mit einem Bogenwinkel zwischen etwa 500° bis 600° beschreibt. Die erwähnte Federwindung kann dadurch eine vollständige einfache Windung bilden, wobei die über einen Bogenwinkel von 360° hinausgehenden Abschnitte die Tatsache berücksichtigen, dass der Einspannabschnitt und der zum Bodenbearbeitungsabschnitt des Federzinkens führende Bereich nebeneinander verlaufen, während die Windung ein einseitiges Ende des Federzinkens bildet.

Ebenso denkbar sind jedoch auch doppelte Windungen oder mehrfache Windungen. Bei einer solchen Ausgestaltung kann weiterhin vorgesehen sein, dass der Einspannabschnitt des wenigstens einen mit der Vorspannkraft beaufschlagten Federzinkens auf einer Oberseite oder auf einer Unterseite eines Rahmenträgers des Rahmens aufliegt und befestigt bzw. befestigbar ist. Außerdem kann die wenigstens eine Windung des mit der Vorspannkraft beaufschlagten Federzinkens in Bewegungsrichtung des Bodenbearbeitungsgeräts frontseitig des Rahmenträgers angeordnet sein, an dem der Federzinken befestigt bzw. befestigbar ist, was insgesamt zu einer besonders platzsparenden Bauweise des Bodenbearbeitungsgerätes mit relativ tief liegendem Rahmen beitragen kann, wodurch auch größere Geräte mit schwenkbaren und/oder faltbaren Abschnitten kompakt genug ausfallen können, um einen problemlosen Transport, bspw. auf öffentlichen Straßen, zu erlauben.

Beim erfindungsgemäßen Bodenbearbeitungssystem kann weiter vorgesehen sein, dass der Federzinken zwischen dem Auflageabschnitt und dem am Befestigungsabschnitt aufgesetzten bzw. dort verschraubten furchenden Eingriffselement einen Bogenwinkel von etwa 120° bis ca. 150° abdeckt.

Außerdem kann vorgesehen sein, dass eine Rahmenhöhe des landwirtschaftlichen Bodenbearbeitungsgerätes und eine Länge zwischen dem Mittelpunkt der wenigstens einen Windung und der Spitze des Federzinkens in einem Verhältnis von etwa 1:1,2 stehen. Damit steht für die Bodenbearbeitung und für den Ausweichweg des Federzinkens ausreichend Raum zur Verfügung, ohne die Maschine relativ groß und zu hoch bauen zu müssen. Zugleich können Verstopfungen, verursacht durch den Boden bei einer Feldfahrt, zumindest weitgehend vermieden werden, da die gesamte Anordnung sehr viel freien Raum für die Bewegungen des Federzinkens wie auch für auflaufende Erde bei der Bodenbearbeitung lässt.

Erfindungsgemäß ist vorgesehen, dass der Auflageabschnitt im montierten Zustand am Rahmenträger in Bezug auf den Einspannabschnitt des Federzinkens einen Winkel zwischen ca. 3° und ca. 15°, vorzugsweise zwischen ca. 5° und ca. 11°, einschließt. Während der Auflageabschnitt und der Einspannabschnitt im entspannten Zustand zumindest weitgehend parallel und auf einer Ebene angeordnet sind, kann der Auflageabschnitt im montierten Zustand um einen definierten Winkel angehoben werden. Dieser Winkel kann durch das Auflageelement, insbesondere durch die keilförmige Unterlage, eingestellt werden.

Darüber hinaus kann vorgesehen sein, dass der Federzinken zumindest weitgehend eine durchgängig gleiche Materialstärke aufweist. Allerdings sind auch Ausführungsvarianten denkbar, bei denen mit über die Länge des Federzinkens
Das erwähnte Auflageelement bzw. das starre oder elastische Auflageelement kann bspw. auf einer Oberseite oder auf einer Unterseite des Rahmenträgers angeordnet sein, an dem der Federzinken befestigt bzw. befestigbar ist. Hierbei kann vorgesehen sein, dass der in den bogen- oder sichelförmigen Verlauf übergehende und der wenigstens einen Windung folgende Rückenabschnitt des Federzinkens auf dem die Vorspannung definierenden Auflageelement aufliegt. Auch eine solche Ausgestaltung trägt zu einer sehr kompakten Bauausführung des erfindungsgemäßen Bodenbearbeitungsgerätes bei, da hierbei der Federzinken mitsamt seiner federnden Windung bspw. nicht unterhalb des Rahmens aufgehängt werden muss, was zu gewissen Nachteilen hinsichtlich des benötigten Bauvolumens der gesamten Maschine führt, da aufgrund der erforderlichen Abmessungen des Federzinkens bei dessen Aufhängung unterhalb des Rahmens der gesamte Rahmen entsprechend hoch anzuordnen wäre.

Es sei an dieser Stelle betont, dass sich alle Aspekte des oben erwähnten erfindungsgemäßen landwirtschaftlichen Bodenbearbeitungsgerätes gleichermaßen auf den nachfolgend in verschiedenen Ausführungsvarianten beschriebenen Federzinken und/oder auf die nachfolgend in verschiedenen Ausführungsvarianten beschriebene Anordnung beziehen können. Wenn also an einer Stelle oder an mehreren Stellen die Rede vom Bodenbearbeitungsgerät und/oder einer seiner Ausführungsvarianten die Rede war, so beziehen sich die in diesem Zusammenhang definierten Merkmalskombinationen, Eigenschaften und/oder die dabei gemachten Aussagen uneingeschränkt auch auf den erfindungsgemäßen Federzinken und/oder auf die erfindungsgemäße Anordnung.

Zur Erreichung der oben genannten Ziele schlägt die Erfindung weiterhin einen Federzinken mit wenigstens einer Federwindung mit den Merkmalen des Anspruchs 8 vor. Dieser erfindungsgemäße Federzinken kann insbesondere in einem landwirtschaftlichen Bodenbearbeitungsgerät wie einem Grubber o. dgl. gemäß einer der zuvor beschriebenen Ausführungsvarianten eingesetzt werden. Der Federzinken ist in zumindest fünf aufeinanderfolgende Abschnitte unterteilt, wobei ein erster Abschnitt durch einen Einspannabschnitt gebildet ist, welcher auf einer Oberseite oder auf einer Unterseite des Rahmens aufliegt und befestigbar ist. Ein zweiter Abschnitt ist durch wenigstens einer Windung gebildet, welche wenigstens eine Windung des Federzinkens in Bewegungsrichtung des Bodenbearbeitungsgeräts frontseitig des Rahmenträgers angeordnet ist, an dem der Federzinken befestigbar ist. Ein dritter Abschnitt ist durch einen Auflageabschnitt gebildet, welcher in etwa horizontal über die Oberseite oder unter einer Unterseite des Querträgers geführt ist. Ein vierter Abschnitt ist durch einen bogen- oder sichelförmigen Verlauf des Federzinkens gebildet. Ein fünfter Abschnitt ist durch ein in Fahrtrichtung schräg nach unten und vorne weisendes freies Ende gebildet, das als Befestigungsabschnitt für ein den Boden furchendes Eingriffselement dient.

Erfindungsgemäß ist vorgesehen, dass der Federzinken mit definierter und/oder innerhalb definierbarer Grenzen variabler und/oder variabel einstellbarer Vorspannkraft beaufschlagt oder beaufschlagbar ist.

Der Federzinken kann in einem ersten, nicht an einem Rahmen und/oder Trägerteil, insbesondere eines landwirtschaftlichen Bodenbearbeitungsgeräts montiertem Zustand entspannt bzw. nicht vorgespannt sein, während er in einem zweiten, an einem Rahmen und/oder Trägerteil montierten Zustand vorgespannt und/oder mit definierter und/oder innerhalb definierbarer Grenzen variabel einstellbarer Vorspannkraft beaufschlagt oder beaufschlagbar ist. Somit kann der erfindungsgemäße Federzinken zumindest im montierten und damit vorgespannten Zustand eine nichtlineare Kraft-Weg-Kennlinie aufweisen. Dies kann insbesondere bedeuten, dass die nichtlineare Kraft-Weg-Kennlinie einen, ausgehend von einem Nullpunkt, flachen Verlauf aufweist, der bei Erreichen der Vorspannkraft in einen steileren Verlauf übergeht, bspw. unter Überwindung eines Knickes im Verlauf.

Der erfindungsgemäße Federzinken ist vorzugsweise elastisch nachgiebig, wobei die elastischen Eigenschaften des wenigstens einen Federzinkens sowohl durch seine Vorspannung, durch die Formgebung und/oder die Materialstärke des Federzinkens und/oder durch seine Materialeigenschaften und/oder durch seine Verankerung am Tragrahmen definiert bzw. mitbestimmt sein können. Wahlweise kann der Federzinken einen bogen- oder sichelförmigen Verlauf, wahlweise auch einen S-förmigen Verlauf aufweisen, welcher abschnittsweise, insbesondere in einem Bereich nahe eines am Rahmen oder Trägerabschnitt befestigbaren Einspannabschnittes in etwa gleichgerichtet, parallel oder ungefähr parallel zum Einspannabschnitt verläuft, wobei die wenigstens eine Federwindung des Federzinkens einen Kreisbogen oder Kreisbogenabschnitt mit einem Bogenwinkel zwischen etwa 500° bis etwa 600° beschreibt. Wahlweise kann der Federzinken mit einer einfachen Windung, einer doppelten Windung oder auch einer mehrfachen Windung ausgestattet sein.

Beim erfindungsgemäßen Federzinken kann vorgesehen sein, dass der Federzinken zwischen dem Auflageabschnitt und dem am Befestigungsabschnitt aufgesetzten bzw. dort verschraubten furchenden Eingriffselement einen Bogenwinkel von etwa 120° bis ca. 150° abdeckt. Es kann vorgesehen sein, dass eine Rahmenhöhe und eine Länge zwischen Mittelpunkt der wenigstens einen Windung und Spitze in einem Verhältnis von 1:1,2 stehen. Damit steht für die Bodenbearbeitung ausreichend Raum zur Verfügung, ohne die Maschine relativ groß bauen zu müssen. Zugleich können Verstopfungen, verursacht durch den Boden bei einer Feldfahrt, zumindest weitgehend vermieden werden. Weiter ist gemäß der Erfindung vorgesehen, dass der Auflageabschnitt im montierten Zustand in Bezug auf den Einspannabschnitt einen Winkel zwischen 3° und 10° einschließt. Während der Auflageabschnitt und der Einspannabschnitt im entspannten Zustand zumindest weitgehend parallel und auf einer Ebene angeordnet sind, kann der Auflageabschnitt im montierten Zustand um einen definierten Winkel angehoben werden. Dieser Winkel kann durch das Auflageelement, insbesondere durch die keilförmige Unterlage, eingestellt werden. Es kann vorgesehen sein, dass der Federzinken zumindest weitgehend eine gleiche Materialstärke aufweist. Wahlweise kann der Federzinken auch in seiner Materialstärke zumindest abschnittsweise variiert werden.

Es sei an dieser Stelle betont, dass sich alle Aspekte des oben erwähnten erfindungsgemäßen Federzinkens gleichermaßen auf das zuvor in verschiedenen Ausführungsvarianten beschriebene landwirtschaftliche Bodenbearbeitungsgerät und/oder auf die nachfolgend in verschiedenen Ausführungsvarianten beschriebene Anordnung beziehen können. Wenn also an einer Stelle oder an mehreren Stellen die Rede von dem Federzinken und/oder einer seiner Ausführungsvarianten die Rede war, so beziehen sich die in diesem Zusammenhang definierten Merkmalskombinationen, Eigenschaften und/oder die dabei gemachten Aussagen uneingeschränkt auch auf das erfindungsgemäße landwirtschaftliche Bodenbearbeitungsgerät und/oder die erfindungsgemäße Anordnung.

Schließlich schlägt die vorliegende Erfindung zur Erreichung zumindest eines oder auch mehrerer der oben genannten Ziele eine Anordnung eines Federzinkens an einem Rahmen und/oder Trägerteil eines landwirtschaftlichen Bodenbearbeitungsgeräts mit den Merkmalen des Anspruchs 13 vor. Der Federzinken kann bspw. an einem Grubber montiert und dabei mittels eines Auflageelements vorgespannt sein. Der Federzinken ist in zumindest fünf Abschnitte unterteilbar, wobei ein erster Abschnitt durch einen Einspannabschnitt gebildet ist, welcher auf einer Oberseite oder auf einer Unterseite des Rahmens aufliegt und befestigbar ist. Ein zweiter Abschnitt ist durch wenigstens eine Windung gebildet, welche wenigstens eine Windung des Federzinkens in Bewegungsrichtung des Bodenbearbeitungsgeräts frontseitig des Rahmenträgers angeordnet ist, an dem der Federzinken befestigbar ist. Ein dritter Abschnitt ist durch einen Auflageabschnitt gebildet, welcher in etwa horizontal über die Oberseite oder unter der Unterseite des Querträgers geführt ist. Ein vierter Abschnitt ist durch einen bogen- oder sichelförmigen Verlauf des Federzinkens gebildet ist. Ein fünfter Abschnitt ist durch ein in Fahrtrichtung schräg nach unten und vorne weisendes freies Ende gebildet, das als Befestigungsabschnitt für ein den Boden furchendes Eingriffselement dient.

Erfindungsgemäß ist vorgesehen, dass zumindest einer der Federzinken mit definierter und/oder innerhalb definierbarer Grenzen variabler und/oder variabel einstellbarer Vorspannkraft beaufschlagt ist.

Wahlweise kann bei dieser Anordnung der zumindest eine im montierten Zustand mit der Vorspannkraft beaufschlagte Federzinken nahe seiner Befestigungsstelle am Rahmen mittels eines elastischen Auflageelements vorgespannt sein, wobei dieses Auflageelement bspw. durch einen elastischen Kunststoff o. dgl. gebildet sein kann, oder wobei dieses Auflageelement als starres Element, bspw. durch einen metallischen Werkstoff gebildet sein kann. Wahlweise ist es auch denkbar, in einem nichterfindungsgemäßen Beispiel, den zumindest einen im montierten Zustand mit der Vorspannkraft beaufschlagten Federzinken mittels wenigstens eines hydraulischen Aktors und/oder pneumatischen Aktor und/oder Feder- und/oder Dämpfungselements vorzuspannen. Hierbei kann wahlweise vorgesehen sein, den Federzinken mittels wenigstens eines verstellbaren hydraulischen Aktors und/oder verstellbaren Feder- und/oder Dämpfungselements vorzuspannen.

Die Anordnung kann dann besonders kompakt ausfallen, wenn der Einspannabschnitt des wenigstens einen mit der Vorspannkraft beaufschlagten Federzinkens auf einer Oberseite oder auf einer Unterseite eines Rahmenträgers des Rahmens aufliegt und befestigt bzw. befestigbar ist. Außerdem kann es von Vorteil sein, wenn die wenigstens eine Windung des mit der Vorspannkraft beaufschlagten Federzinkens in Bewegungsrichtung des Bodenbearbeitungsgeräts frontseitig des Rahmenträgers angeordnet ist, an dem der Federzinken befestigt bzw. befestigbar ist. Zur Kompaktheit der erfindungsgemäßen Anordnung trägt es zudem bei, wenn das Auflageelement auf einer Oberseite oder auf einer Unterseite des Rahmenträgers angeordnet ist, an dem der Federzinken befestigt bzw. befestigbar ist, wobei der in den bogen- oder sichelförmigen Verlauf übergehende und der wenigstens einen Windung folgende Rückenabschnitt des Federzinkens auf dem die Vorspannung definierenden Auflageelement aufliegt.

Bei der erfindungsgemäßen Anordnung kann vorgesehen sein, dass der Federzinken zwischen dem Auflageabschnitt und dem am Befestigungsabschnitt aufgesetzten bzw. dort verschraubten furchenden Eingriffselement einen Bogenwinkel von etwa 120° bis ca. 150° abdecken. Es kann vorgesehen sein, dass eine Rahmenhöhe und eine Länge zwischen Mittelpunkt der wenigstens einen Windung und Spitze in einem Verhältnis von 1:1,2 stehen. Damit steht für die Bodenbearbeitung ausreichend Raum zur Verfügung, ohne die Maschine relativ groß bauen zu müssen. Zugleich können Verstopfungen, verursacht durch den Boden bei einer Feldfahrt zumindest weitgehend vermieden werden. Weiter kann vorgesehen sein, dass der Auflageabschnitt mit montierten Zustand in Bezug auf den Einspannabschnitt einen Winkel zwischen 4° und 10° einschließt. Während der Auflageabschnitt und der Einspannabschnitt im entspannten Zustand zumindest weitgehend parallel und auf einer Ebene angeordnet sind, kann der Auflageabschnitt im montierten Zustand um einen definierten Winkel angehoben werden. Der Winkel kann durch das Auflageelement, insbesondere durch die keilförmige Unterlage, eingestellt werden. Es kann vorgesehen sein, dass der Federzinken zumindest weitgehend eine gleiche Materialstärke aufweist. Wahlweise kann der Federzinken auch in seiner Materialstärke zumindest abschnittsweise variiert werden.

Es sei an dieser Stelle betont, dass sich alle Aspekte der oben erwähnten erfindungsgemäßen Anordnung gleichermaßen auf das zuvor in verschiedenen Ausführungsvarianten beschriebene landwirtschaftliche Bodenbearbeitungsgerät und/oder auf den zuvor in verschiedenen Ausführungsvarianten beschriebenen Federzinken beziehen können. Wenn also an einer Stelle oder an mehreren Stellen die Rede von der Anordnung und/oder einer ihrer Ausführungsvarianten die Rede war, so beziehen sich die in diesem Zusammenhang definierten Merkmalskombinationen, Eigenschaften und/oder die dabei gemachten Aussagen uneingeschränkt auch auf das erfindungsgemäße landwirtschaftliche Bodenbearbeitungsgerät und/oder den erfindungsgemäßen Federzinken.

Die Erfindung lässt sich insbesondere in der Landwirtschaft, in der Bodenbearbeitung und/oder in der Bauwirtschaft einsetzen und damit gewerblich anwenden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsvariante eines landwirtschaftlichen Bodenbearbeitungsgerätes bzw. eines Grubbers, der eine Vielzahl von Federzinken trägt, die jeweils an einem Rahmen befestigt sind.
Fig. 2 zeigt in insgesamt fünf schematischen Ansichten (Fig. 2A, Fig. 2B, Fig. 2C, Fig. 2D und Fig. 2E) eine Variante eines erfindungsgemäßen Federzinkens, wie er insbesondere Teil eines landwirtschaftlichen Bodenbearbeitungsgerätes bzw. eines Grubbers gemäß Fig. 1 sein kann.
Fig. 3 zeigt in insgesamt drei schematischen Ansichten (Fig. 3A, Fig. 3B und Fig. 3C) den Federzinken gemäß Fig. 2 in verschiedenen Montagezuständen.
Fig. 4 zeigt eine Kraft-Weg-Kennlinie eines vorgespannten Federzinkens.

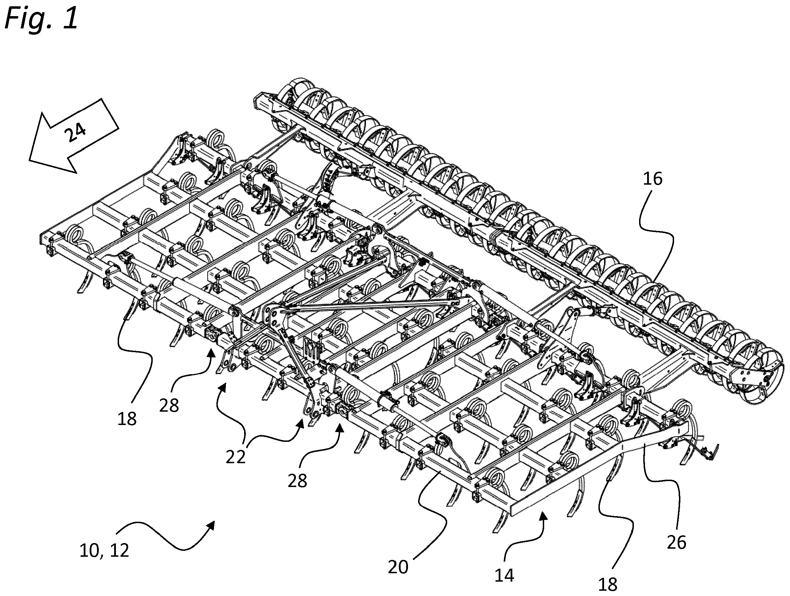

Für gleiche oder gleich wirkende Elemente der Erfindung werden in den Figuren 1 bis 4 jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Die schematische Perspektivansicht der Fig. 1 zeigt eine Ausführungsvariante eines gezogenen landwirtschaftlichen Bodenbearbeitungsgerätes 10, das hier durch einen Grubber 12 gebildet ist, der insbesondere von einer hier nicht dargestellten landwirtschaftlichen Zugmaschine gezogen werden kann. Wenn im folgenden Zusammenhang unter Bezugnahme auf die Figuren 1 bis 4 von einem landwirtschaftlichen Bodenbearbeitungsgerät 10 oder von einem Grubber 12 gesprochen wird, so sind diese Begriffe generell synonym zu verstehen, außer es wird gesondert darauf hingewiesen.

Der in Fig. 1 beispielhaft gezeigte Grubber 12 ist mit einem Tragrahmen, Maschinenrahmen bzw. mit einem Rahmen 14 ausgestattet, an dem wahlweise geeignete Mittel zur Tiefenführung wie z.B. höhenverstellbare Tragräder angeordnet sein können (hier nicht gezeigt). Im gezeigten Ausführungsbeispiel ist heckseitig am Rahmen 14 eine höhenverstellbare Walze 16 gelagert, die gleichzeitig die Höheneinstellung des Rahmens 14 und damit die Tiefenführung der am Rahmen 14 befestigten Bodenbearbeitungswerkzeuge übernehmen kann. Diese Bodenbearbeitungswerkzeuge sind im gezeigten Ausführungsbeispiel durch insgesamt vier hintereinander angeordnete Reihen von jeweils zehn Federzinken 18 gebildet. Die Federzinken 18 sind jeweils an durch Vierkantrohre gebildeten Querträgern 20 des Rahmens 14 fixiert. Der Rahmen 14 ist durch insgesamt vier solcher Querträger 20 gebildet, wobei am hinteren Querträger 20 die höhenverstellbare Walze 16 gelagert und angelenkt ist. Der vordere Querträger 20 trägt einen Dreipunkt-Anschluss 22, dessen oberer Anschluss über Stützstreben im Bereich des hinteren Querträgers 20 abgestützt ist. Der Dreipunkt-Anschluss 22 dient der Verbindung mit einem hydraulisch heb- und senkbaren Dreipunkt-Kraftheber einer hier nicht gezeigten Zugmaschine, welche das landwirtschaftliche Bodenbearbeitungsgerät 10 bzw. den Grubber 12 bei bestimmungsgemäßem Einsatz in eine Fahrtrichtung 24 ziehen kann. Die insgesamt vier Querträger 20 sind mehrfach verbunden durch Längsträger 26, wodurch ein stabiler Rahmenverbund gebildet ist. Sinnvollerweise können seitliche Abschnitte des Rahmens 12 gegenüber einem Mittelteil an Gelenkstellen 28 um horizontale Schwenkachsen nach oben verschwenkt werden, was das landwirtschaftliche Bodenbearbeitungsgerät 10 bzw. den Grubber 12 in für einen Straßentransport taugliche Abmessungen bringen kann. Gleiches kann für die Walze 16 gelten, die für einen entsprechenden Falt- oder Klappvorgang sinnvollerweise mehrfach unterteilt sein kann.

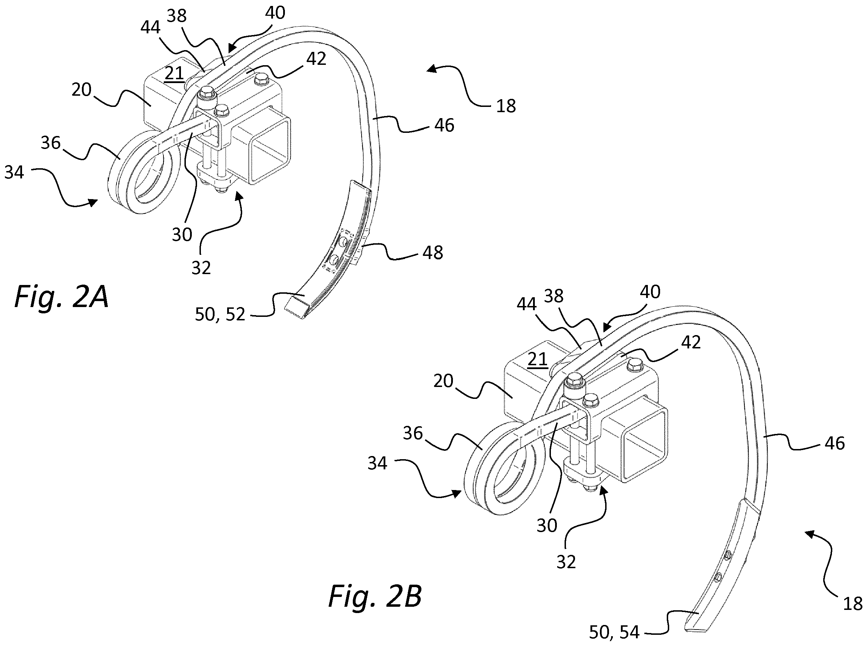

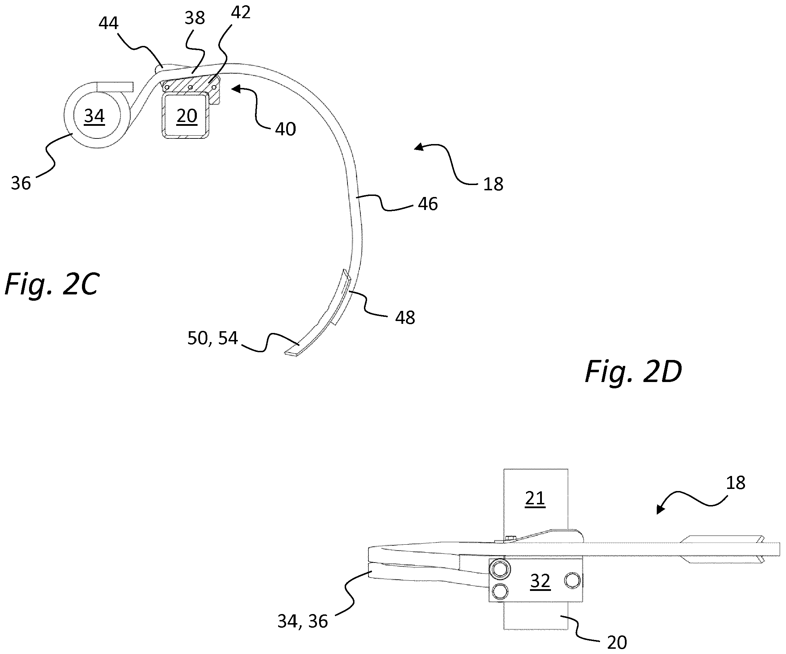

Die schematischen Perspektivdarstellungen der Figuren 2A und 2B zeigen zwei verschiedene Ausführungsvarianten des erfindungsgemäßen Federzinkens 18, der jeweils an einem der Querträger 20 des Rahmens 14 des landwirtschaftlichen Bodenbearbeitungsgeräts 10 bzw. des Grubbers 12 (vgl. Fig. 1) fixiert ist. Die Fig. 2C zeigt den Federzinken 18 und den Querträger 20 in einer Seitenansicht, während die Fig. 2D eine Draufsicht auf den Federzinken 18 und einen kurzen Teil des Querträgers 20 zeigt.

Wie es die Fig. 1 beispielhaft verdeutlicht, trägt der Rahmen 14 des Bodenbearbeitungsgerätes 10 bzw. des Grubbers 12 eine Vielzahl der in den Figuren 2A bis 2D gezeigten Federzinken 18, die jeweils einen zumindest abschnittsweise bogen- oder sichelförmigen Verlauf aufweisen und jeweils zumindest abschnittsweise elastisch verformbar und/oder unter Zugbelastung bei einem Eingriff bzw. Eintauchen in einen Ackerboden zumindest abschnittsweise elastisch nachgiebig sind. Der gezeigte Federzinken 18 ist durch einen entsprechend geformten Federstahl mit vierkantförmigem Querschnitt gebildet, wobei seine elastischen Eigenschaften sowohl durch die Formgebung und die Materialstärke des Federzinkens 18, durch seine Materialeigenschaften als auch durch seine Verankerung am Tragrahmen 14 definiert sind. Wie nachfolgend näher erläutert wird, ist jeder einzelne der Federzinken 18 mit definierter oder innerhalb definierbarer Grenzen variabel einstellbarer Vorspannkraft am Tragrahmen 12 verankert und fixiert.

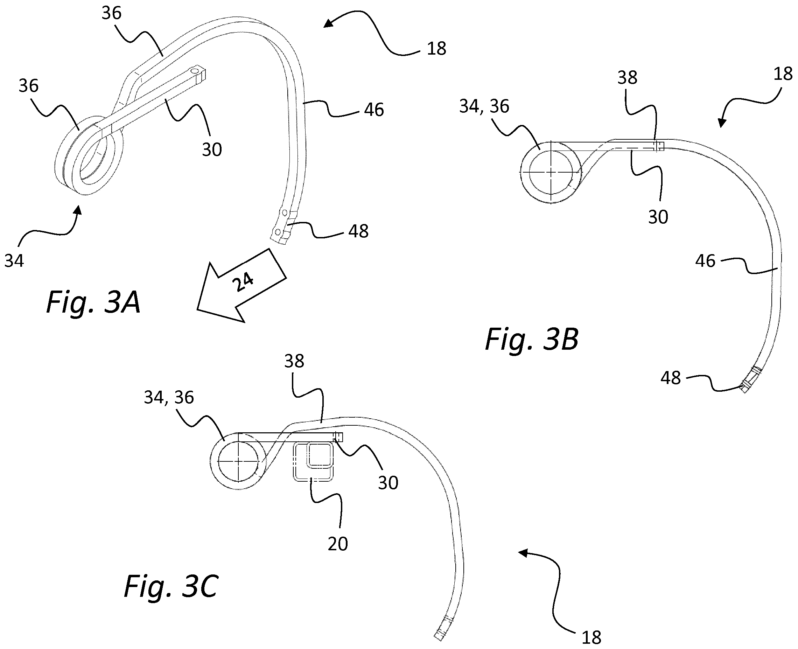

Jeder der Federzinken 18 umfasst insgesamt fünf Abschnitte bzw. Bereiche, wobei ein erster Abschnitt durch einen Einspannabschnitt 30 gebildet ist, der durch einen kurzen geraden Abschnitt des Federzinkens 18 gebildet ist, was besonders anhand der perspektivischen Schemadarstellung der Fig. 3A verdeutlicht ist. Wie es die Figuren 2A bis 2D zeigen, ist der kurze Einspannabschnitt 30 mittels einer Klemme 32 am als Vierkantrohr ausgebildeten Querträger 20 verschraubt, so dass der Einspannabschnitt 30 des Federzinkens 18 in Fahrtrichtung 24 nach vorne ragt. Wie es die Figuren 2A bis 2C verdeutlichen, liegt der Einspannabschnitt 30 unmittelbar auf einer Oberseite 21 des Querträgers 20 auf.

Der Einspannabschnitt 30 des Federzinkens 18 geht über in einen zweiten Abschnitt, der durch eine Ringfeder 34 mit wenigstens einer vollständigen Federwindung 36 gebildet ist, deren Windungsdurchmesser in etwa der Größenordnung des Rohrdurchmessers des Querträgers 20 entsprechen kann, wahlweise jedoch auch größer oder kleiner sein kann. Wie es die Figuren 2A, 2B und 3A verdeutlichen, durchläuft das Vierkantmaterial des Federstahls des Federzinkens 18 die Federwindung 36 der Ringfeder 34 in einem Bogenwinkel von etwa 540°, da anderthalb Windungen zu durchlaufen sind, bis sich der dritte Abschnitt des Federzinkens 18 anschließt.

Dieser dritte Abschnitt des Federzinkens 18 ist durch einen Auflageabschnitt 38 gebildet, der in etwa gleichgerichtet, parallel oder ungefähr parallel zu dem am Querträger 20 des Rahmens 12 befestigten Einspannabschnitt 30 verläuft. Im montierten Zustand des Federzinkens 18 liegt dieser Auflageabschnitt 38 des Federzinkens 18 auf einem Auflageelement 40 auf, das sich auf der Oberseite 21 des Querträgers 20 befindet, und das wahlweise Teil der Klemme 32 sein bzw. mit dieser verbunden sein kann. Das Auflageelement 40 ist durch eine keilförmige Unterlage 42 gebildet, an dem sich ein seitlicher Stützstreifen 44 befindet, so dass der Auflageabschnitt 38 zwischen der Klemme 32 und dem seitlichen Stützstreifen 44 geführt und am Herabrutschen vom Auflageelement 40 bei starker seitlicher Verformung während einer Bodenbearbeitung gehindert ist. Wahlweise kann das Auflageelement 40 bzw. dessen keilförmige Unterlage 42 durch ein elastisches Material bzw. durch ein elastisches Kunststoffmaterial gebildet sein, das durch den leicht schrägen Verlauf des Auflageabschnittes 38 über die keilförmige Unterlage 42 in gewünschter Weise vorspannt.

Die Figuren 3B und 3C verdeutlichen die vorspannende Wirkungsweise des Auflageelements 40 in Zusammenwirkung mit dem Auflageabschnitt 38 des Federzinkens 18, der durch die Formgebung der Ringfeder 34 in der gezeigten Weise vorgespannt werden kann. Die Fig. 3B zeigt eine Seitenansicht eines nicht montierten Federzinkens 18, bei dem in entspannter Lage der Auflageabschnitt 38 exakt oder annähernd parallel zum Einspannabschnitt 30 verläuft. Dagegen zeigt die Seitenansicht der Fig. 3C den vorgespannten Federzinken 18, dessen Auflageabschnitt 38 im montierten Zustand durch die darunter befindliche keilförmige Unterlage 42 des Auflageelements 40 (vgl. Fig. 2C) leicht angehoben ist, so dass die Abschnitte 30 und 38 nicht mehr parallel verlaufen, sondern einen spitzen Winkel von bspw. 3° bis etwa 10° einschließen können, je nachdem, welches Maß an Vorspannung für den jeweiligen Einsatzfall gewünscht bzw. benötigt ist.

An den durch den Auflageabschnitt 38 gebildeten dritten Abschnitt des Federzinkens 18 schließt sich als vierter Abschnitt unmittelbar der eigentliche bogenförmige Zinkenbereich an, der von dem in etwa horizontal über die Oberseite 21 des Querträgers 20 geführten Auflageabschnitt 38 einem bogen- oder sichelförmigen Verlauf folgt und hierbei einen Bogenwinkel von zunächst etwa 90° einschließt. Der Bogenradius dieses bogenförmigen Zinkenabschnittes 46 ist naturgemäß deutlich größer als der Rohrdurchmesser des Querträgers 20 und beträgt zudem ein Mehrfaches des Durchmessers der Ringfeder 34. So kann der Bogenradius des bogenförmigen Zinkenabschnittes 46 bspw. etwa dem Drei- bis Sechsfachen des Durchmessers der Ringfeder 34 entsprechen, wahlweise jedoch auch noch größer sein. An diesen vierten Bereich des Federzinkens 18, der durch den bogenförmigen Zinkenabschnitt 46 gebildet ist, welcher im unteren Bereich in etwa vertikaler Richtung verläuft, schließt sich als fünfter Abschnitt ein in Fahrtrichtung 24 nach schräg unten und vorne weisendes freies Ende an, das als Befestigungsabschnitt 48 für ein den Boden furchendes Eingriffselement 50 dient. Wie es die Seitenansicht der Fig. 2C verdeutlicht, kann der Federzinken 18 zwischen dem Auflageabschnitt 38 und dem am Befestigungsabschnitt 48 aufgesetzten bzw. dort verschraubten furchenden Eingriffselement 50 einen Bogenwinkel von etwa 120° bis ca. 150° abdecken.

Das Eingriffselement 50 kann bspw. als schaufelförmige Scharspitze 52 (Fig. 2A) oder bspw. auch als V-förmige Scharspitze 54 (Fig. 2B) ausgebildet sein. Wahlweise sind auch andere Konturen denkbar, bspw. als sog. Gänsefußschar oder dgl. (nicht dargestellt).

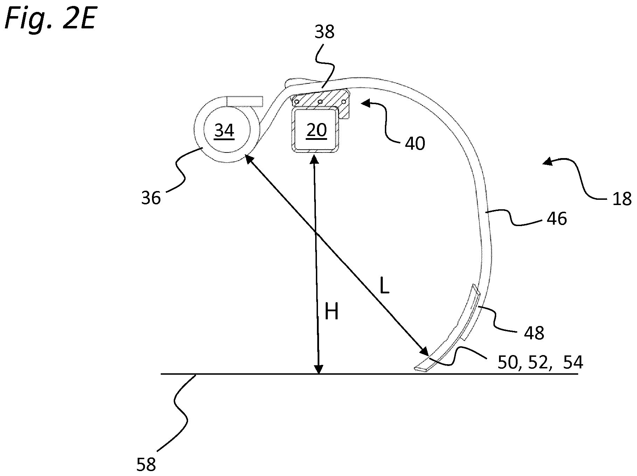

Der Federzinken 18 ist derart ausgebildet, dass eine Rahmenhöhe und eine Länge zwischen Mittelpunkt der wenigstens einen Federwindung 36 und der Scharspitze 52, 54 in einem Verhältnis von ungefähr 1:1,2 stehen. Um dies zu veranschaulichen, zeigt die Fig. 2E eine Seitenansicht entsprechend Fig. 2C, wo die Rahmenhöhe zum Boden 58 durch das Maß H gekennzeichnet ist, während die Länge bzw. der Abstand zwischen dem Mittelpunkt der Federwindung 36 und der Scharspitze 52 bzw. 54 durch das Maß L gekennzeichnet ist. Wie es die Darstellung der Fig. 2E erkennen lässt, ist das Maß L typischerweise etwas größer als das Maß H, vorzugsweise um den Faktor 1,2. Dieses Verhältnis bezieht sich auf die stehende Maschine, bei der sich das Eingriffselement 50 noch nicht im Eingriff mit dem Boden 58 befindet, so dass der Federzinken 18 nicht nach hinten verschoben ist.

Im montierten Zustand schließt der Auflageabschnitt 38 in Bezug auf den Einspannabschnitt 30 einen Winkel zwischen ca. 3° und ca. 15° ein, wobei der Winkel insbesondere einen Wert zwischen ca. 5° und ca. 11° annehmen kann. Während der Auflageabschnitt 38 und der Einspannabschnitt 20 im entspannten Zustand zumindest weitgehend parallel und auf einer Ebene angeordnet sind, wird der Auflageabschnitt 38 im montierten Zustand um einen definierten Winkel angehoben werden. Der Winkel wird durch das Auflageelement 40, insbesondere durch die keilförmige Unterlage 42, eingestellt. Der Federzinken 18 weist zumindest weitgehend die gleiche Materialstärke auf.

Wie es die Figuren 2A bis 2E verdeutlichen, befindet sich die wenigstens eine Federwindung 36 der Ringfeder 34 des mit der Vorspannkraft beaufschlagten Federzinkens 18 in Fahrtrichtung 24 des Bodenbearbeitungsgeräts 10 frontseitig des Querträgers 20, an dem der Federzinken 18 befestigt ist, was insgesamt zu einer besonders platzsparenden Bauweise des Bodenbearbeitungsgerätes 10 bzw. Grubbers 12 mit relativ tief liegendem Rahmen 14 beitragen kann, wodurch auch größere Geräte 10 mit schwenkbaren und/oder faltbaren Abschnitten kompakt genug ausfallen können, um einen problemlosen Transport zu ermöglichen, insbesondere einen Transport auf öffentlichen Straßen. Auch die Anordnung des Auflageelements 40 an der Oberseite 21 des Querträgers 20 trägt zu einer sehr kompakten Bauausführung des Bodenbearbeitungsgerätes 10 bei, da hierbei die gleichartig fixierten und ausgestalteten Federzinken 18 (vgl. Fig. 1) mitsamt ihrer federnden Windung 36 nicht unterhalb des Rahmens 14 aufgehängt werden müssen. Andernfalls wäre aufgrund der erforderlichen Abmessungen der Federzinken 18 bei deren Aufhängung unterhalb des Rahmens 14 der gesamte Rahmen 14 entsprechend hoch anzuordnen, um einen ausreichenden Federweg des Federzinkens 18 zu gewährleisten.

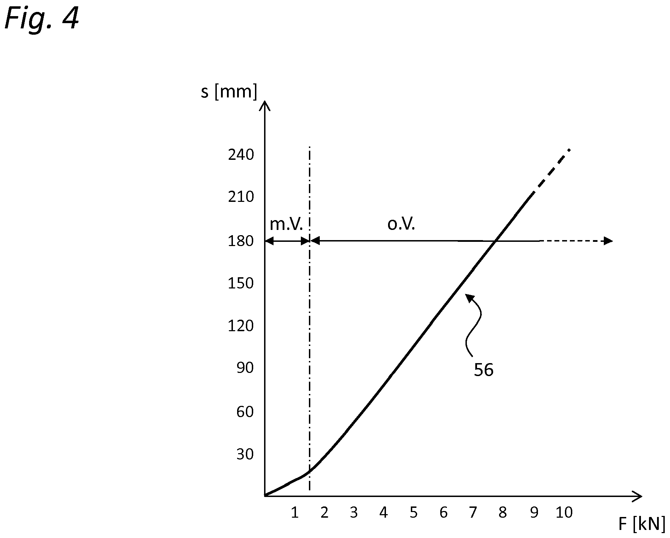

Das schematische Diagramm der Fig. 4 verdeutlicht den Effekt der Vorspannung der Federzinken 18, die durch ihre federnde Ausgestaltung und die Ringfeder 34 bereits eine erwünschte und zur Vermeidung von Beschädigungen erforderliche Nachgiebigkeit beim Auftreffen auf größere Hindernisse wie Steine, Erdbrocken oder andere derartige Hindernisse aufweisen. Darüber hinaus sind die Federzinken 18 jeweils mit einer definierten und/oder innerhalb definierbarer Grenzen variabel einstellbaren Vorspannkraft beaufschlagt. Wie es die Figuren 3B und 3C verdeutlichen, sind die Federzinken 18 in einem ersten, nicht montierten Zustand entspannt bzw. nicht vorgespannt (Fig. 3B), während dieselben Federzinken 18 in einem zweiten, montierten Zustand vorgespannt und/oder mit definierter und/oder innerhalb definierbarer Grenzen variabel einstellbarer Vorspannkraft beaufschlagt sind (Fig. 3C).

Die anhand des Diagramms der Fig. 4 verdeutlichte Vorspannung der Federzinken 18 ermöglichen eine weitgehend gleichmäßige Bodenbearbeitung. Wie es das Kraft-Weg-Diagramm der Fig. 4 andeutet, geben die Federzinken 18 bei Hindernissen nach und weichen entgegen der Fahrtrichtung um bis zu 200 mm oder ggf. etwas mehr aus, wodurch sie beim Auftreffen auf Hindernisse wie etwa Steine noch einen ausreichenden Federweg zur Verfügung stellen können. Gemäß der Vorgabe der vorliegenden Erfindung weist jedoch der im montierten Zustand mit der Vorspannkraft beaufschlagte Federzinken 18 eine nichtlineare Kraft-Weg-Kennlinie 56 auf. Diese nichtlineare Kraft-Weg-Kennlinie 56, die einen Zusammenhang zwischen einer während eines Bodenbearbeitungsvorganges auf den Federzinken 18 bzw. auf seine Scharspitze 52 bzw. 54 wirkende und entgegen der Fahrtrichtung 24 gerichtete Widerstandskraft und einer Auslenkung zeigt, folgt zunächst von einem Nullpunkt ausgehend einem relativ flachen Verlauf, der bei Erreichen der definierten bzw. definierbaren Vorspannkraft in einen steileren Verlauf übergeht. Auf der horizontalen Abszisse ist eine auf den Federzinken 18 wirkende Kraft in Kilonewton (F in kN) aufgetragen, während die vertikale Ordinate die hierdurch bewirkte Auslenkung in Millimeter (s in mm) zeigt.

Im gezeigten Ausführungsbeispiel der Fig. 4 beschreibt die Kennlinie 56 bei einer wirksamen Kraft zwischen etwa Null und etwa 1,5 kN einen flacheren Verlauf, da hier die Vorspannung (m.V. in Fig. 4) wirkt, wodurch die Auslenkung bei etwa 1,5 kN nur ca. 15 mm beträgt. Anschließend weist die Kennlinie 56 eine Unstetigkeitsstelle bzw. einen mehr oder weniger deutlichen Knick in ihrem Verlauf auf, der je nach Ausgestaltung der Vorspannung ggf. auch durch einen abgerundeten bzw. weicheren Übergang oder - je nach Ausgestaltung als mehrstufige Vorspannung - auch durch mehrfache Knicke etc. ersetzt sein kann. Nach diesem Knick bzw. der Steigungszunahme ab 1,5 kN steigt die Kurve steiler an, bleibt in diesem Bereich ohne Vorspannung (o.V. in Fig. 4) jedoch weitgehend linear, so dass bei einer wirkenden Kraft von etwa 9 kN eine Auslenkung von etwas mehr als 200 mm erreicht sein kann.

Der Bereich jenseits von 9 kN und einer Auslenkung von mehr als ca. 210 mm ist im gezeigten Ausführungsbeispiel undefiniert, da bei einer Überschreitung einer bestimmten Maximalkraft eine Überlastung des Federzinkens 18, ggf. dessen plastische Verformung und/oder sein Versagen drohen kann.

Durch Anpassung der Materialstärke des Federzinkens 18, der Auslegung der Ringfeder 34, der Radien des bogenförmigen Bereichs 46 und/oder der Höhe des Auflageelements 40 und/oder dessen Vorspannkraft können sowohl die Kurvenverläufe der Kraft-Weg-Kennlinie 56 als auch deren Steigung, die Platzierung des Übergangsbereichs zwischen dem flacheren Verlauf mit Vorspannung und dem steileren Verlauf ohne Vorspannung etc. angepasst und modifiziert werden.

### Bezugszeichenliste

10 Bodenbearbeitungsgerät, landwirtschaftliches Bodenbearbeitungsgerät
12 Grubber
14 Rahmen, Tragrahmen, Maschinenrahmen
16 Walze
18 Federzinken
20 Querträger, Querrohr, Trägerteil, Rahmenträger
21 Oberseite (des Querträgers, des Querrohrs)
22 Dreipunkt-Anschluss
24 Fahrtrichtung, Bewegungsrichtung
26 Längsträger
28 Gelenkstelle
30 Einspannabschnitt (erster Abschnitt des Federzinkens)
32 Klemme, Schraubklemme, verschraubte Klemme
34 Ringfeder
36 Federwindung
38 Auflageabschnitt
40 Auflageelement
42 Unterlage, elastische Unterlage, keilförmige Unterlage
44 Stützstreifen, seitlicher Stützstreifen
46 bogenförmiger Zinkenbereich, bogenförmiger Zinkenabschnitt
48 Befestigungsabschnitt
50 Eingriffselement
52 Scharspitze, schaufelförmige Scharspitze
54 Scharspitze, V-förmige Scharspitze
56 Kraft-Weg-Kennlinie
58 Boden
s Weg, Ausweichbewegung des Federzinkens
F Kraft, Auslösekraft
H Rahmenhöhe (Abstand vom Boden zum Rahmenträger)
L Länge/Abstand zwischen dem Mittelpunkt der Federwindung und der Scharspitze

## Patentansprüche

1. Landwirtschaftliches Bodenbearbeitungsgerät (10), insbesondere Grubber (12), mit einem Rahmen (14) und daran befestigten Federzinken (18), welche jeweils wenigstens eine Federwindung (36) aufweisen, welcher Federzinken (18) zumindest fünf aneinander anschließende Abschnitte umfasst,
- wobei ein erster Abschnitt durch einen Einspannabschnitt (30) gebildet ist, welcher auf einer Oberseite oder auf einer Unterseite eines Rahmenträgers (20) des Rahmens (14) aufliegt und dort befestigbar ist,
- wobei ein zweiter Abschnitt durch wenigstens eine Federwindung (36) gebildet ist, welche wenigstens eine Federwindung (36) des Federzinkens (18) in Bewegungsrichtung des Bodenbearbeitungsgeräts (10) frontseitig am Rahmenträger (20) angeordnet ist, an dem der Federzinken (18) befestigt bzw. befestigbar ist,
- wobei ein dritter Abschnitt durch einen Auflageabschnitt gebildet ist, welcher in etwa horizontal über eine Oberseite (21) oder unter einer Unterseite des Rahmenträgers (20) geführt ist,
- wobei ein vierter Abschnitt durch einen bogen- oder sichelförmigen Verlauf des Federzinkens (18) gebildet ist,
- und wobei ein fünfter Abschnitt durch ein in Fahrtrichtung schräg nach unten und vorne weisendes freies Ende gebildet ist, das als Befestigungsabschnitt (48) für ein den Boden furchendes Eingriffselement (50) dient,
**dadurch gekennzeichnet, dass**
zumindest einer der Federzinken (18) mit definierter und/oder innerhalb definierbarer Grenzen variabler Vorspannkraft beaufschlagt ist, wobei der zumindest eine mit der Vorspannkraft beaufschlagte Federzinken (18) mittels eines Auflageelements (40) vorgespannt ist, sodass der Auflageabschnitt im montierten Zustand am Rahmenträger (20) in Bezug auf den Einspannabschnitt (30) des Federzinkens (18) durch das Auflageelement (40) einen Winkel zwischen ca. 3° und ca. 15°, vorzugsweise zwischen ca. 5° und ca. 11°, einschließt.

2. Bodenbearbeitungsgerät nach Anspruch 2, dessen wenigstens einer mit der Vorspannkraft beaufschlagte Federzinken (18) einen bogen- oder sichelförmigen Verlauf aufweist, welcher abschnittsweise, insbesondere in einem Bereich nahe des Rahmens (14) in etwa gleichgerichtet, parallel oder ungefähr parallel zu einem am oder im Rahmen (14) befestigten bzw. befestigbaren Einspannabschnitt (30) verläuft, wobei die wenigstens eine vollständige Federwindung (36) des Federzinkens (18) einen Kreisbogen oder Kreisbogenabschnitt mit einem Bogenwinkel zwischen etwa 500° bis 600° beschreibt.

3. Bodenbearbeitungsgerät nach einem der Ansprüche 1 oder 2, bei dem das Auflageelement (40) auf einer Oberseite (21) oder auf einer Unterseite des Rahmenträgers (20) angeordnet ist, an dem der Federzinken (18) befestigt bzw. befestigbar ist, wobei der in den bogen- oder sichelförmigen Verlauf übergehende und der wenigstens einen Windung folgende Rückenabschnitt (46) des Federzinkens (18) auf dem die Vorspannung definierenden Auflageelement (40) aufliegt.

4. Bodenbearbeitungsgerät nach einem der Ansprüche 1 bis 3, bei dem das Auflageelement (40) zumindest teil- oder abschnittsweise aus einem elastisch nachgiebigen Material gebildet ist.

5. Bodenbearbeitungsgerät nach einem der Ansprüche 1 bis 4, bei dem der Federzinken (18) zwischen dem Auflageabschnitt (38) und dem am Befestigungsabschnitt (48) aufgesetzten bzw. dort verschraubten furchenden Eingriffselement (50) einen Bogenwinkel von etwa 120° bis ca. 150° abdeckt.

6. Bodenbearbeitungsgerät nach einem der Ansprüche 1 bis 5, bei dem der wenigstens eine Federzinken (18) in einem ersten, nicht montierten Zustand entspannt bzw. nicht vorgespannt ist, und bei dem der Federzinken (18) in einem zweiten, montierten Zustand vorgespannt und/oder mit definierter und/oder innerhalb definierbarer Grenzen variabel einstellbarer Vorspannkraft beaufschlagt ist.

7. Bodenbearbeitungsgerät nach einem der Ansprüche 1 bis 6, bei dem der zumindest eine mit der Vorspannkraft beaufschlagte Federzinken (18) eine nichtlineare Kraft-Weg-Kennlinie (56) aufweist.

8. Federzinken (18) mit wenigstens einer Federwindung (36), insbesondere zur Verwendung in einem landwirtschaftlichen Bodenbearbeitungsgerät (10) wie einem Grubber (12) o. dgl., insbesondere gemäß einem der Ansprüche 1 bis 9, welcher Federzinken (18) zumindest fünf aneinander anschließende Abschnitte umfasst,
- wobei ein erster Abschnitt durch einen Einspannabschnitt (30) gebildet ist, welcher auf einer Oberseite oder auf einer Unterseite eines Rahmenträgers (20) des Rahmens (14) auflegbar und dort befestigbar ist,
- wobei ein zweiter Abschnitt durch wenigstens eine Federwindung (36) gebildet ist, welche wenigstens eine Federwindung (36) des Federzinkens (18) in Bewegungsrichtung des Bodenbearbeitungsgeräts (10) frontseitig am Rahmenträger (20) angeordnet ist, an dem der Federzinken (18) befestigbar ist,
- wobei ein dritter Abschnitt durch einen Auflageabschnitt gebildet ist, welcher in etwa horizontal über eine Oberseite (21) oder unter einer Unterseite des Rahmenträgers (20) führbar ist,
- wobei ein vierter Abschnitt durch einen bogen- oder sichelförmigen Verlauf des Federzinkens (18) gebildet ist,
- und wobei ein fünfter Abschnitt durch ein in Fahrtrichtung schräg nach unten und vorne weisendes freies Ende gebildet ist, das als Befestigungsabschnitt (48) für ein den Boden furchendes Eingriffselement (50) dient,
**dadurch gekennzeichnet, dass** der
Federzinken (18) mit definierter und/oder innerhalb definierbarer Grenzen variabler Vorspannkraft beaufschlagbar ist,
wobei der zumindest eine im montierten Zustand mit der Vorspannkraft beaufschlagte Federzinken (18) nahe seiner Befestigungsstelle am Rahmen (14) mittels eines elastischen Auflageelements (40) vorgespannt ist,
und wobei der Auflageabschnitt im montierten Zustand in Bezug auf den Einspannabschnitt (30) des Federzinkens (18) durch das Auflageelement (40) einen Winkel zwischen 3° und 10° einschließt.

9. Federzinken nach Anspruch 8, der in einem ersten, nicht an einem Rahmen (14) und/oder Trägerteil (20), insbesondere eines landwirtschaftlichen Bodenbearbeitungsgeräts (10) montiertem Zustand entspannt bzw. nicht vorgespannt ist, und der in einem zweiten, an einem Rahmen (14) und/oder Trägerteil (20) montierten Zustand vorgespannt und/oder mit definierter und/oder innerhalb definierbarer Grenzen variabel einstellbarer Vorspannkraft beaufschlagt bzw. beaufschlagbar ist.

10. Federzinken nach einem der Ansprüche 8 oder 9, der zumindest im montierten und damit vorgespannten Zustand eine nichtlineare Kraft-Weg-Kennlinie (56) aufweist.

11. Federzinken nach einem der Ansprüche 8 bis 10, der elastisch nachgiebig ist, wobei die elastischen Eigenschaften des wenigstens einen Federzinkens (18) sowohl durch seine Vorspannung, durch die Formgebung und/oder die Materialstärke des Federzinkens (18) und/oder durch seine Materialeigenschaften und/oder durch seine Verankerung am Tragrahmen (14) definiert bzw. mitbestimmt sind.

12. Federzinken nach einem der Ansprüche 8 bis 11, der einen bogen- oder sichelförmigen Verlauf aufweist, welcher abschnittsweise, insbesondere in einem Bereich nahe eines am Rahmen (14) oder Trägerabschnitt (20) befestigbaren Einspannabschnittes (30) in etwa gleichgerichtet, parallel oder ungefähr parallel zum Einspannabschnitt (30) verläuft, wobei die wenigstens eine vollständige Federwindung (36) des Federzinkens (18) einen Kreisbogen oder Kreisbogenabschnitt mit einem Bogenwinkel zwischen etwa 500° bis 600° beschreibt.

13. Anordnung eines Federzinkens gemäß einem der Ansprüche 8 bis 12, der an einem Rahmen (14) und/oder Trägerteil (20) eines landwirtschaftlichen Bodenbearbeitungsgeräts (10) gemäß einem der Ansprüche 1 bis 7, insbesondere eines Grubbers (12) montiert ist, welcher Federzinken (18) zumindest fünf aneinander anschließende Abschnitte umfasst,
- wobei ein erster Abschnitt durch einen Einspannabschnitt (30) gebildet ist, welcher auf einer Oberseite oder auf einer Unterseite eines Rahmenträgers (20) des Rahmens (14) aufliegt und dort befestigbar ist,
- wobei ein zweiter Abschnitt durch wenigstens eine Federwindung (36) gebildet ist, welche wenigstens eine Federwindung (36) des Federzinkens (18) in Bewegungsrichtung des Bodenbearbeitungsgeräts (10) frontseitig am Rahmenträger (20) angeordnet ist, an dem der Federzinken (18) befestigt bzw. befestigbar ist,
- wobei ein dritter Abschnitt durch einen Auflageabschnitt gebildet ist, welcher in etwa horizontal über eine Oberseite (21) oder unter einer Unterseite des Rahmenträgers (20) geführt ist,
- wobei ein vierter Abschnitt durch einen bogen- oder sichelförmigen Verlauf des Federzinkens (18) gebildet ist,
- und wobei ein fünfter Abschnitt durch ein in Fahrtrichtung schräg nach unten und vorne weisendes freies Ende gebildet ist, das als Befestigungsabschnitt (48) für ein den Boden furchendes Eingriffselement (50) dient.

14. Anordnung nach Anspruch 13, bei der zumindest einer der Federzinken (18) mit definierter und/oder innerhalb definierbarer Grenzen variabler und/oder variabel einstellbarer Vorspannkraft beaufschlagt ist.

15. Anordnung nach Anspruch 14 bei welcher der Einspannabschnitt (30) des wenigstens einen mit der Vorspannkraft beaufschlagten Federzinkens (18) auf einer Oberseite (21) oder auf einer Unterseite eines Rahmenträgers (20) des Rahmens (14) aufliegt und befestigt bzw. befestigbar ist.

16. Anordnung nach Anspruch 14 oder 15, bei der die wenigstens eine Windung (36) des mit der Vorspannkraft beaufschlagten Federzinkens (18) in Bewegungsrichtung (24) des Bodenbearbeitungsgeräts frontseitig am Rahmenträger (20) angeordnet ist, an dem der Federzinken (18) befestigt bzw. befestigbar ist.

17. Anordnung nach einem der Ansprüche 14 bis 16, bei der das Auflageelement (40) auf einer Oberseite (21) oder auf einer Unterseite des Rahmenträgers (20) angeordnet ist, an dem der Federzinken (18) befestigt bzw. befestigbar ist, wobei der in den bogen- oder sichelförmigen Verlauf übergehende und der wenigstens einen Windung (36) folgende Rückenabschnitt (46) des Federzinkens (18) auf dem die Vorspannung definierenden Auflageelement (40) aufliegt.

## Claims

1. An agricultural soil tillage implement (10), in particular a field cultivator (12), with a frame (14) and spring tines (18) attached thereto, each having at least one spring coil (36), which spring tine (18) comprises at least five consecutive sections,
- wherein a first section is formed by a clamping section (30), which rests on and is attachable to a top side or underside of a frame crossmember (20) of the frame (14),
- wherein a second section is formed by at least one spring coil (36), which at least one spring coil (36) of the spring tine (18) is arranged at the front - as seen in movement direction of the soil tillage implement (10) - of the frame crossmember (20) to which the spring tine (18) is attached or attachable,
- wherein a third section is formed by a support section, which is guided approximately horizontally over a top side (21) or beneath an underside of the frame crossmember (20),
- wherein a fourth section is formed by an arc- or crescent-shaped profile of the spring tine (18),
- and wherein a fifth section is formed by a free end facing obliquely downward and forward as seen in travel direction, which fifth section serves as attachment section (48) for a soil-furrowing engagement element (50),
**characterised in that**, at least one of the spring tines (18) is under application of a preload force that is defined and/or variable within definable limits, wherein the at least one spring tine (18) under application of the preload force is preloaded by a support element (40), which support element (40) causes the support section in a mounted state to enclose an angle at the frame crossmember (20), which angle is between about 3 degrees and about 15 degrees, preferably between about 5 degrees and about 11 degrees, in relation to the clamping section (30) of the spring tine (18).

2. The soil tillage implement according to claim 2, of which the at least one spring tine (18) under application of the preload force has an arc- or crescent-shaped profile, which in sections, in particular in an area near the frame (14), runs approximately in the same direction, parallel, or approximately parallel to a clamping section (30) attached or attachable to or in the frame (14), wherein the at least one complete spring coil (36) of the spring tine (18) describes a circular arc or a circular arc segment with an arc angle between about 500 degrees and 600 degrees.

3. The soil tillage implement according to one of the claims 1 or 2, in which the support element (40) is arranged on a top side (21) or on an underside of the frame crossmember (20) to which the spring tine (18) is attached or attachable, wherein the spring tine (18) back section (46), which merges into the arc- or crescent-shaped profile and follows the at least one coil, rests on the support element (40) defining the preload force.

4. The soil tillage implement according to one of the claims 1 to 3, in which the support element (40) is at least in part or in sections formed from an elastically yielding material.

5. The soil tillage implement according to one of the claims 1 to 4, in which the spring tine (18) covers an arc angle of about 120 degrees to about 150 degrees between the support section (38) and the furrowing engagement element (50) mounted or bolted to the attachment section (48).

6. The soil tillage implement according to one of the claims 1 to 5, in which in a first, non-mounted state, the at least one spring tine (18) is relaxed or not preloaded, and in which in a second, mounted state, the spring tine (18) is preloaded and/or under application of a preload force that is defined and/or variably adjustable within definable limits.

7. The soil tillage implement according to one of the claims 1 to 6, in which the at least one spring tine (18) under application of the preload force has a non-linear force displacement curve (56).

8. A spring tine (18) with at least one spring coil (36), in particular for use in an agricultural soil tillage implement (10), such as a field cultivator (12) or the like, in particular according to one of the claims 1 to 7, which spring tine (18) comprises at least five consecutive sections,
- wherein a first section is formed by a clamping section (30), which is restable on and attachable to a top side or underside of a frame crossmember (20) of the frame (14),
- wherein a second section is formed by at least one spring coil (36), which at least one spring coil (36) of the spring tine (18) is arranged at the front - as seen in movement direction of the soil tillage implement (10) - of the frame crossmember (20) to which the spring tine (18) is attachable,
- wherein a third section is formed by a support section, which is guidable approximately horizontally over a top side (21) or beneath an underside of the frame crossmember (20),
- wherein a fourth section is formed by an arc- or crescent-shaped profile of the spring tine (18),
- and wherein a fifth section is formed by a free end facing obliquely downward and forward as seen in travel direction, which fifth section serves as attachment section (48) for a soil-furrowing engagement element (50),
**characterised in that**, a preload force that is defined and/or variable within definable limits is applicable to the spring tine (18),
wherein the at least one spring tine (18), which is under application of the preload force in a mounted state, is preloaded by an elastic support element (40) close to its attachment location at the frame (14),
and wherein the support element (40) causes the support section in a mounted state to enclose an angle between 3 degrees and 10 degrees in relation to the clamping section (30) of the spring tine (18).

9. The spring tine according to claim 8, which is relaxed or not preloaded in a first state, in which the spring tine (18) is not mounted to a frame (14) and/or to a frame crossmember (20) of, in particular, an agricultural soil tillage implement (10), and which spring tine (18) is preloaded and/or to which spring tine (18) a preload force that is defined and/or variable within definable limits is applied or applicable in a second state, in which the spring tine (18) is mounted to a frame (14) and/or to a frame crossmember (20).

10. The spring tine according to one of the claims 8 or 9, which at least in a mounted and thus preloaded state has a non-linear force displacement curve (56).

11. The spring tine according to one of the claims 8 to 10, which is elastically yielding, wherein the elastic characteristics of the at least one spring tine (18) are defined or co-determined by its preload as well as by the shape and/or material thickness of the spring tine (18) and/or by its material characteristics and/or by its anchorage at the carrier frame (14).

12. The spring tine according to one of the claims 8 to 11, which has an arc- or crescent-shaped profile, which in sections, in particular in an area near a clamping section (30) that is attachable to a frame (14) or to a frame crossmember (20), runs approximately in the same direction, parallel, or approximately parallel to the clamping section (30), wherein the at least one complete spring coil (36) of the spring tine (18) describes a circular arc or a circular arc segment with an arc angle between about 500 degrees and 600 degrees.

13. An arrangement of a spring tine according to one of the claims 8 to 12, the spring tine being mounted to a frame (14) and/or to a frame crossmember (20) of an agricultural soil tillage implement (10) according to one of the claims 1 to 7, in particular to a frame (14) and/or to a frame crossmember (20) of a field cultivator (12), which spring tine (18) comprises at least five consecutive sections,
- wherein a first section is formed by a clamping section (30), which rests on and is attachable to a top side or underside of a frame crossmember (20) of the frame (14),
- wherein a second section is formed by at least one spring coil (36), which at least one spring coil (36) of the spring tine (18) is arranged at the front - as seen in movement direction of the soil tillage implement (10) - of the frame crossmember (20) to which the spring tine (18) is attached or attachable,
- wherein a third section is formed by a support section, which is guided approximately horizontally over a top side (21) or beneath an underside of the frame crossmember (20),
- wherein a fourth section is formed by an arc- or crescent-shaped profile of the spring tine (18),
- and wherein a fifth section is formed by a free end facing obliquely downward and forward as seen in travel direction, which fifth section serves as attachment section (48) for a soil-furrowing engagement element (50).

14. The arrangement according to claim 13, in which at least one of the spring tines (18) is under application of a preload force that is defined and/or variable within definable limits and/or variably adjustable.

15. The arrangement according to claim 14, in which the clamping section (30) of the at least one spring tine (18) under application of the preload force rests on and is attached or attachable to a top side (21) or underside of a frame crossmember (20) of the frame (14).

16. The arrangement according to claim 14 or 15, in which the at least one coil (36) of the spring tine (18) under application of the preload force is arranged at the front - as seen in movement direction (24) of the soil tillage implement (10) - of the frame crossmember (20) to which the spring tine (18) is attached or attachable.

17. The arrangement according to one of the claims 14 to 16, in which the support element (40) is arranged on a top side (21) or on an underside of the frame crossmember (20) to which the spring tine (18) is attached or attachable, wherein the spring tine (18) back section (46), which merges into the arc- or crescent-shaped profile and follows the at least one coil (36), rests on the support element (40) defining the preload force.

## Revendications

1. Outil agricole à travailler le sol (10), en particulier cultivateur (12), comprenant un châssis (14) et des dents faisant ressort (18) qui sont fixées sur celui-ci et qui présentent chacune au moins une spire de ressort (36), laquelle dent faisant ressort (18) comprend au moins cinq sections contiguës les unes aux autres,
- dans lequel une première section est formée par une section de serrage (30) qui repose sur une face supérieure ou sur une face inférieure d'un support de châssis (20) du châssis (14) et peut y être fixée,
- dans lequel une deuxième section est formée par au moins une spire de ressort (36), laquelle au moins une spire de ressort (36) de la dent faisant ressort (18) est agencée, dans la direction de déplacement de l'outil à travailler le sol (10), côté frontal sur le support de châssis (20) sur lequel la dent faisant ressort (18) est fixée ou bien peut être fixée,
- dans lequel une troisième section est formée par une section d'appui qui est guidée à peu près horizontalement sur une face supérieure (21) ou sous une face inférieure du support de châssis (20),
- dans lequel une quatrième section est formée par une allure en arc ou en forme de faucille de la dent faisant ressort (18),
- et dans lequel une cinquième section est formée par une extrémité libre qui montre obliquement vers le bas et vers l'avant dans le sens de marche et qui fait fonction de section de fixation (48) pour un élément d'engagement (50) qui sillonne le sol,
**caractérisé par le fait qu'**au moins l'une des dents faisant ressort (18) est soumise à une force de précontrainte définie et/ou variable dans des limites définissables, dans lequel ladite au moins une dent faisant ressort (18) soumise à la force de précontrainte est précontrainte au moyen d'un élément d'appui (40) de sorte que, à l'état monté sur le support de châssis (20), la section d'appui fait un angle compris entre environ 3° et environ 15°, de préférence entre environ 5° et environ 11°, par rapport à la section de serrage (30) de la dent faisant ressort (18), par l'élément d'appui (40).

2. Outil à travailler le sol selon la revendication 2, dont ladite au moins une dent faisant ressort (18) soumise à la force de précontrainte présente une allure en arc ou en forme de faucille qui s'étend par sections, en particulier dans une zone située près du châssis (14), à peu près dans la même direction, parallèlement ou à peu près parallèlement à une section de serrage (30) fixée ou bien apte à être fixée sur ou dans le châssis (14), dans laquelle ladite au moins une spire de ressort (36) complète de la dent faisant ressort (18) décrit un arc de cercle ou une section d'arc de cercle ayant un angle d'arc compris entre environ 500° et 600°.

3. Outil à travailler le sol selon l'une quelconque des revendications 1 ou 2, dans lequel ledit élément d'appui (40) est agencé sur une face supérieure (21) ou sur une face inférieure du support de châssis (20) sur lequel est fixée ou bien peut être fixée la dent faisant ressort (18), dans lequel la section dorsale (46) de la dent faisant ressort (18), qui passe dans l'allure en arc ou en forme de faucille et suit ladite au moins une spire repose sur l'élément d'appui (40) qui définit la précontrainte.

4. Outil à travailler le sol selon l'une quelconque des revendications 1 à 3, dans lequel l'élément d'appui (40) est formé au moins en partie ou par sections à partir d'un matériau élastiquement souple.

5. Outil à travailler le sol selon l'une quelconque des revendications 1 à 4, dans lequel la dent faisant ressort (18) entre la section d'appui (38) et l'élément d'engagement (50) sillonnant qui est posé sur la section de fixation (48) ou bien y vissé couvre un angle d'arc compris entre 120° à peu près et 150° à peu près.

6. Outil à travailler le sol selon l'une quelconque des revendications 1 à 5, dans lequel, dans un premier état non monté, ladite au moins une dent faisant ressort (18) est détendue ou bien non précontrainte, et dans lequel, dans un deuxième état monté, la dent faisant ressort (18) est précontrainte et/ou est soumise à une force de précontrainte définie et/ou réglable de manière variable dans des limites définissables.

7. Outil à travailler le sol selon l'une quelconque des revendications 1 à 6, dans lequel ladite au moins une dent faisant ressort (18) soumise à la force de précontrainte présente une caractéristique force-déplacement (56) non linéaire.

8. Dent faisant ressort (18) présentant au moins une spire de ressort (36), en particulier destinée à être utilisée dans un outil agricole à travailler le sol (10) tel qu'un cultivateur (12) ou similaire, en particulier selon l'une quelconque des revendications 1 à 7, laquelle dent faisant ressort (18) comprend au moins cinq sections contiguës les uns aux autres,
- dans lequel une première section est formée par une section de serrage (30) que l'on peut faire reposer sur une face supérieure ou sur une face inférieure d'un support de châssis (20) du châssis (14) et qui peut y être fixée,
- dans lequel une deuxième section est formée par au moins une spire de ressort (36), laquelle au moins une spire de ressort (36) de la dent faisant ressort (18) est agencée, dans la direction de déplacement de l'outil à travailler le sol (10), côté frontal sur le support de châssis (20) sur lequel la dent faisant ressort (18) peut être fixée,
- dans lequel une troisième section est formée par une section d'appui qui peut être guidée à peu près horizontalement sur une face supérieure (21) ou sous une face inférieure du support de châssis (20),
- dans lequel une quatrième section est formée par une allure en arc ou en forme de faucille de la dent faisant ressort (18),
- et dans lequel une cinquième section est formée par une extrémité libre qui montre obliquement vers le bas et vers l'avant dans le sens de marche et qui fait fonction de section de fixation (48) pour un élément d'engagement (50) qui sillonne le sol,
**caractérisé par le fait que** la dent faisant ressort (18) peut être soumise à une force de précontrainte définie et/ou variable dans des limites définissables,
dans lequel ladite au moins une dent faisant ressort (18) soumise à la force de précontrainte à l'état monté est précontrainte, près de son point de fixation sur le châssis (14), au moyen d'un élément d'appui élastique (40),
et dans lequel, à l'état monté, la section d'appui fait un angle compris entre 3° et 10° par rapport à la section de serrage (30) de la dent faisant ressort (18), par l'élément d'appui (40).

9. Dent faisant ressort selon la revendication 8, qui, dans un premier état non monté sur un châssis (14) et/ou une partie de support (20), en particulier d'un outil agricole à travailler le sol (10), est détendue ou bien non précontrainte, et qui, dans un deuxième état monté sur un châssis (14) et/ou une partie de support (20), est précontrainte et/ou est soumise ou bien peut être soumise à une force de précontrainte définie et/ou réglable de manière variable dans des limites définissables.

10. Dent faisant ressort selon l'une quelconque des revendications 8 ou 9, qui présente, au moins à l'état monté et ainsi précontraint, une caractéristique force-déplacement (56) non linéaire.

11. Dent faisant ressort selon l'une quelconque des revendications 8 à 10, qui est élastiquement souple, dans laquelle les propriétés élastiques de ladite au moins une dent faisant ressort (18) sont définies ou bien également déterminées aussi bien par sa précontrainte, par la forme et/ou l'épaisseur de matière de la dent faisant ressort (18) et/ou par ses propriétés de matière et/ou par son ancrage sur le châssis de support (14).

12. Dent faisant ressort selon l'une quelconque des revendications 8 à 11, qui présente une allure en arc ou en forme de faucille qui s'étend par sections, en particulier dans une zone située près d'une section de serrage (30) apte à être fixée sur le châssis (14) ou la section de support (20), à peu près dans la même direction, parallèlement ou à peu près parallèlement à la section de serrage (30), dans laquelle ladite au moins une spire de ressort (36) complète de la dent faisant ressort (18) décrit un arc de cercle ou une section d'arc de cercle ayant un angle d'arc compris entre environ 500° et 600°.

13. Agencement d'une dent faisant ressort selon l'une quelconque des revendications 8 à 12, qui est montée sur un châssis (14) et/ou une partie de support (20) d'un outil agricole à travailler le sol (10) selon l'une quelconque des revendications 1 à 7, en particulier d'un cultivateur (12), laquelle dent faisant ressort (18) comprend au moins cinq sections contiguës les unes aux autres,
- dans lequel une première section est formée par une section de serrage (30) qui repose sur une face supérieure ou sur une face inférieure d'un support de châssis (20) du châssis (14) et qui peut y être fixée,
- dans lequel une deuxième section est formée par au moins une spire de ressort (36), laquelle au moins une spire de ressort (36) de la dent faisant ressort (18) est agencée, dans la direction de déplacement de l'outil à travailler le sol (10), côté frontal sur le support de châssis (20) sur lequel la dent faisant ressort (18) est fixée ou bien peut être fixée,
- dans lequel une troisième section est formée par une section d'appui qui est guidée à peu près horizontalement sur une face supérieure (21) ou sous une face inférieure du support de châssis (20),
- dans lequel une quatrième section est formée par une allure en arc ou en forme de faucille de la dent faisant ressort (18),
- et dans lequel une cinquième section est formée par une extrémité libre qui montre obliquement vers le bas et vers l'avant dans le sens de marche et qui fait fonction de section de fixation (48) pour un élément d'engagement (50) qui sillonne le sol.

14. Agencement selon la revendication 13, dans lequel au moins l'une des dents faisant ressort (18) est soumise à une force de précontrainte définie et/ou variable et/ou réglable de manière variable dans des limites définissables.

15. Agencement selon la revendication 14, dans lequel la section de serrage (30) de ladite au moins une dent faisant ressort (18) soumise à la force de précontrainte repose sur une face supérieure (21) ou sur une face inférieure d'un support de châssis (20) du châssis (14) et y est fixée ou bien peut y être fixée.

16. Agencement selon la revendication 14 ou 15, dans lequel ladite au moins une spire (36) de la dent faisant ressort (18) soumise à la force de précontrainte est agencée, dans la direction de déplacement (24) de l'outil à travailler le sol côté frontal sur le support de châssis (20) sur lequel la dent faisant ressort (18) est fixée ou bien peut être fixée.

17. Agencement selon l'une quelconque des revendications 14 ou 16, dans lequel ledit élément d'appui (40) est agencé sur une face supérieure (21) ou sur une face inférieure du support de châssis (20) sur lequel la dent faisant ressort (18) est fixée ou bien peut être fixée, dans lequel la section dorsale (46) de la dent faisant ressort (18), qui passe dans l'allure en arc ou en forme de faucille et suit ladite au moins une spire (36) repose sur l'élément d'appui (40) qui définit la précontrainte.
